# EUROPEAN PATENT SPECIFICATION

(11) **EP 0 428 176 B1**
(45) Date of publication and mention of the grant of the patent: **22.03.1995**
(21) Application number: 90121919.6
(22) Date of filing: 15.11.1990
(51) Int. Cl.: A01N 37/00, A01N 37/36, A01N 41/08, A01N 47/02, A01N 47/40

(54) **A method for protecting a material from termite damage**
Verfahren zum Schutz eines Stoffs gegen Termitenschäden
Procédé pour proteger de matériaux contre les dégâts des termites

(30) Priority: 15.11.1989 JP 297998/89
(43) Date of publication of application: 22.05.1991
(73) Proprietor: DAIKIN INDUSTRIES, LIMITED, Osaka-shi Osaka 530 (JP)
(72) Inventor: Honda, Yoshitaka, Suita-shi, Osaka-fu (JP); Yanagisawa, Norio, Suita-shi, Osaka-fu (JP)
(74) Representative: Hansen, Bernd, Dr. Dipl.-Chem.

(56) References cited:
- EP-A- 0 148 482
- EP-A- 0 382 208
- WO-A-84/02650
- FR-A- 2 342 828
- US-A- 4 582 901

## Description

The present invention relates to a method for protecting a material from termite damage by using an agent which comprises a specific fluorine-containing polymer as an active ingredient.

### Description of the Related Art

Buildings, in particular, wooden buildings increasingly suffer from significant damage caused by termites. Termites damage not only the buildings but also eat synthetic resins or rubbers which cover underground cables, whereby insulation of the cables is deteriorated. It is estimated that the amount of damage caused by termites in Japan is about one hundred million yen per year. Therefore, it is very important to control or destroy termites.

As termiticides, organic chlorine base compounds such as Chlordane, Heptachlor, Dieldrin, Aldrin, Lindane, chloronaphthalene and the like were widely used, but their use has been forbidden due to their toxicity.

Recently, organic phosphorus base compounds such as Phoxim, Chloropyrifos (diethyl 3,5,6-trichloro-2-pyridylphosphorothionate), Fenthion (dimethyl 4-methylthio-m tolyl phosphorothionate), Fenitrothion (dimethyl 4-nitro-m-tolyl phosphorothionate), Pyridaphenthion (2,3-dihydro-3-oxo-2-phenyl-6-pyridazinyl diethyl phosphorothionate), Tetrachlovinphos (2-chloro-1-(2,4,5-trichlorophenyl) vinyl dimethyl phosphate), etc. and carbamate type compounds such as Carbaryl (1-naphthyl methylcarbamate), etc. have been used.

The organic chlorine base compounds have strong termiticidal activities, but they have toxicity against other organisms including human beings and pollute the environment. Some of the conventional termiticides may not have such problems, but they have insufficient termiticidal activity.

Since termites live in places where their control or destruction is difficult such as in the soil below floors or wooden foundations of the buildings, it is desired that an agent against termites should have an effect which lasts as long as possible after one application.

EP-A-0 382 208, published on 16th August 1990, discloses fluorine-containing cellulose derivatives in which the cellulose moiety may be substituted by a group -CF₂CZ₂-(OCF₂CF₂CZ₂)q where Z represents any of a hydrogen atom, a fluorine atom and a chlorine atom, and q is a number 1-200.

### SUMMARY OF THE INVENTION

One object of the present invention is to provide an agent which protects materials from termite damage but has little or no toxicity against other organisms.

Another object of the present invention is to provide a method for protecting materials from termite damage which uses an agent having long-lasting activity.

According to one aspect, the present invention provides the use of either
a polymer of the formula:

X-(C₃F₆O)ₗ-(C₂F₄O)ₘ-(CF₂O)ₙ-(C₂F₄)ₚ-Y (I)

wherein X is a fluorine atom or a group of the formula: C_{q}F_{2q+1}O- in which q is an integer of 1 to 15; Y is a group of the formula: -COR in which R is a halogen atom, a hydrogen atom or a C₁-C₈ alkyl or fluoroalkyl group, a group of the formula: -OCOR' or -SO₂R' in which R' is a halogen atom or a group of the formula: -NCO; l is a number of 0 to 200; m is a number of 0 to 200, n is a number of 0 to 200; and p is a number of 0 to 200, provided that the sum of l, m and n is not zero;
or a polymer of the formula:

X-(CX₁X₂CF₂CF₂O)ᵣ-(CX₁X₂CF₂)ₙ-Y (II)

wherein X, Y and n are the same as defined above, X₁ and X₂ are the same or different and each is a hydrogen atom, a fluorine atom or a chlorine atom, provided that X₁ and X₂ are not fluorine atoms simultaneously, and r is a number of 1 to 200; as the active ingredient of an agent for protecting materials from termite damage.

According to a second aspect, the present invention provides a method for protecting a material from termite damage which comprises applying to the material an agent which comprises, as an active ingredient
either a polymer of the formula:

X-(C₃F₆O)_{ℓ}-(C₂F₄O)ₘ-(CF₂O)ₙ-(C₂F₄)ₚ-Y (I)

wherein X is a fluorine atom or a group of the formula: C_{q}F_{2q+1}O- in which q is an integer of 1 to 15; Y is a group of the formula: -COR in which R is a halogen atom, a hydrogen atom or a C₁-C₈ alkyl or fluoroalkyl group), a group of the formula: -OCOR' or -SO₂R' in which R' is a halogen atom or a group of the formula: -NCO; ℓ is a number of 0 to 200; m is a number of 0 to 200, n is a number of 0 to 200; and p is a number of 0 to 200, provided that the sum of ℓ, m and n is not zero;
or a polymer of the formula:

X-(CX₁X₂CF₂CF₂O)ᵣ-(CX₁X₂CF₂)ₙ-Y (II)

wherein X, Y and n are the same as defined above, X₁ and X₂ are the same or different and each is a hydrogen atom, a fluorine atom or a chlorine atom, provided that X₁ and X₂ are not fluorine atoms simultaneously, and r is a number of 1 to 200.

The agent of the present invention does not kill termites but prevents damage caused by the termites by imparting to a material to be treated a recognition block or a repellency to termites.

### DETAILED DESCRIPTION OF THE INVENTION

In the above formulae (I) and (II), -C₂F₄- includes -CF₂CF₂- and -CF(CF₃)-, and -C₃F₆- includes -CF₂CF₂CF₂- and -CF(CF₃)-CF₂-.

Specific examples of the polymers of formula (I) to be used in the present invention are as follows:
(1) 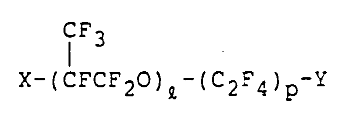 (2) 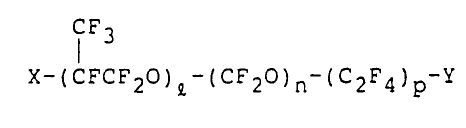
(3) X-(CF₂CF₂O)ₘ-(CF₂O)ₙ-(C₂F₄)ₚ-Y
(4) X-(CF₂CF₂CF₂O)_{ℓ}-(CF₂O)ₙ-(C₂F₄)ₚ-Y
   wherein X, ℓ m, n and p are the same as defined above, and Y is a polar group as defined below.

A specific example of the polymer of formula (II) is a polymer:
(5) X-(CH₂CF₂CF₂O)ᵣ-CH₂CF₂-Y

The molecular weight of the polymer to be used in the present invention is not critical, and is generally from 500 to 200,000, preferably from 2500 to 8000.

The polymers may be used independently or as a mixture of two or more of them.

It is particularly preferred that Y represents -COR.

The specific examples of the polymer which can be used in the present invention may be found in U.S. Patent No. 4,845,268, the disclosure of which is hereby incorporated by reference.

Although the polymer as such can be used as the agent for protecting materials from termite damage, it is usually used as an oily preparation in an organic solvent or in the form of an emulsion or an aerosol together with an emulsifier, a solubilizing agent, a penetrating agent, a stabilizer, a filler, a binding agent, a propellant and the like. Examples of the organic solvent are trichlorotrifluoroethane, pentafluorodichloropropane, hexafluorotetrachlorobutane, perfluorohexane, tetrahydrofuran (THF), diglyme, triglyme, tetraglyme and the like.

The concentration of the active ingredient in the preparation or the dose of the preparation depend on the form of preparation, application method, kinds of materials to be treated such as wood or soil, objects (prevention or control), kinds of termites, degrees of damage caused by the termites, and the like.

In general, in the case of a liquid or powder preparation, the polymer as the active ingredient is contained in an amount of 0.1 to 20 % by weight, more preferably 0.5 to 10 % by weight based on the weight of the whole preparation.

The agent whose use is provided by the present invention is particularly effective against Reticulitermes speratus Kolbe, Coptotermes formosanus Shiraki and Cryptotermes demesticus Haviland.

According to the present invention, the active ingredient as such or the preparation containing the active ingredient may be applied to places where the termites breed or nests of the termites, and any materials damages of which by the termites is to be prevented such as foundations or pillars of buildings, buildings as such, soils around the buildings, water-proof sheets, wrapping materials, coating materials of wires or cables and the like by coating, spraying, dipping, injection, spreading, mixing or incorporation.

The agent whose use is provided by the present invention may be used together with termiticides depending on the degrees of breeding of the termites and the damage. Since termite damage is often accompanied by wood rot caused by wood rotting fungi, it is advantageous to use the agent provided by the present invention in combination with an antiseptic agent, and in addition, an ant-controlling agent. Specific examples of the ant-controlling agent are organic phosphorus base insecticides (e.g. Phoxim, Chloropyrifos, Prothiophos (2,4-dichlorophenyl ethyl 5-propylphosphoro thiolthionate), Fenitrothion, Tetrachlovinphos, etc.), carbamate type insecticides (e.g. Propoxur (O-isopropoxyphenyl methylcarbamate), BPMC (o-sec-butylphenyl methylcarbamate), Carbaryl, etc.) monochloronaphthalene, bis(2,3,3,3-tetrachloropropyl)ether, and the like. Although the organic chlorine-base insecticides (e.g. Chlordan, Heptachlor, etc.) may be used in combination with the agent whose use is provided by the present invention, they should be carefully used since they are accumulated and concentrated in the natural environment.

Examples of the antiseptic agent to be compounded in the agent whose use is provide by the present invention are Creosote oil, pentachlorophenyl laurate, 2,4,6-tribromophenol, 4-chlorophenyl-3'-iodo-propargylformal, diiodomethyl-4-methylphenylsulfone, N,N-dimethyl-N'-(dichlorofluoromethylthio)-N'-phenylsulfamide, bis(tributyltin) oxide, tributyltin phthalate, an aluminum salt of N-nitroso-N-cyclohexylhydroxylamine, N-cyclohexyl-N-methoxy-2,5-dimethylfuran-3-carbocylic acid amide, and the like. They may be used independently or as a mixture of two or more of them.

### PREFERRED EMBODIMENTS OF THE INVENTION

The present invention will be illustrated by following Examples, in which "%" is by weight unless otherwise indicated.

### Example 1

An acid fluoride of the formula:

F-(CF₂CF₂CF₂O)ₙ-CF₂CF₂COF

wherein n is 22 on average was dissolved in trichlorotrifluoroethane (R113) to prepare a solution at a concentration of 0.5 %, 1 %, 3 % or 10 %.

In each solution, a small piece (5 mm x 5 mm x 5 mm) of Japanese larch (Larix leptolepis) was dipped for 24 hours. Then, the piece absorbing the solution was placed in a group of 50 termites (Reticulitermes speratus) consisting of 45 workers (W) and 5 soldiers (S), and the group was observed for three weeks. The results are shown in the following Table.

**Table**

| Days | Number of survived termites | | | | Without wood piece (without food) | With untreated wood piece (with food) |
|---|---|---|---|---|---|---|
| | 10 % | 3 % | 1 % | 0.5 % | | |
| 1st | W 45 | W 45 | W 45 | W 45 | W 45 | W 45 |
| | S 5 | S 5 | S 5 | S 5 | S 5 | S 5 |
| 11th | W 5 | W 4 | W 16 | W 18 | W 40 | W 40 |
| | S 2 | S 0 | S 1 | S 2 | S 3 | S 4 |
| 12th | W 5 | W 2 | W 5 | W 16 | W 12 | W 40 |
| | S 0 | S 0 | S 0 | S 1 | S 2 | S 4 |
| 13th | W 4 | W 1 | W 4 | W 10 | W 10 | W 40 |
| | S 0 | S 0 | S 0 | S 0 | S 0 | S 4 |
| 14th | W 4 | W 1 | W 3 | W 5 | W 8 | W 40 |
| | S 0 | S 0 | S 0 | S 0 | S 0 | S 4 |
| 15th | W 4 | W 1 | W 0 | W 4 | W 5 | W 30 |
| | S 0 | S 0 | S 0 | S 0 | S 0 | S 4 |
| 16th | W 3 | W 1 | W 0 | W 2 | W 4 | W 30 |
| | S 0 | S 0 | S 0 | S 0 | S 0 | S 4 |
| 17th | W 2 | W 0 | W 0 | W 2 | W 2 | W 30 |
| | S 0 | S 0 | S 0 | S 0 | S 0 | S 4 |
| 18th | W 2 | W 0 | W 0 | W 0 | W 2 | W 30 |
| | S 0 | S 0 | S 0 | S 0 | S 0 | S 4 |
| 19th | 0 | 0 | 0 | 0 | 0 | W 30 |
| | | | | | | S 4 |

### Example 2

The solution prepared in Example 1 was coated on a small pine piece by dipping or spraying. Then, the pine piece was dyed with Fantred in red and fed to a group of termites. After two weeks, no eating scar was found on the pine piece, and no termite was colored red.

For comparison, a pine piece which was dyed with Fantred but was not coated with the present agent was fed to a group of termites. After two weeks, eating scars were found on the pine piece and the termites were colored red.

### Example 3

The same experiment as in Example 1 was repeated by using CF₃CF₂CF₂O[CF(CF₃)-CF₂O]₃-COF (A) or F-(CH₂CF₂CF₂O)ₙ-CH₂CF₂COF (B) in which n is 22 on average as a polymer. When the polymer (A) was used, all the termites were dead after 8 days, while when the polymer (B) was used, all the termites were dead after 10 days.

From the results of Example 1 that the termites died after the same test period in the case where the wood piece coated with the polymer provided by the present invention was fed and in the case where no wood piece was fed, and from the result of Example 2 that no eating scar was found on the treated wood piece, it is understood that the termites were starved to death but not killed by the polymer provided by the present invention. The death of the termites is not natural death, since the termites which were fed survived.

## Claims

1. The use of either
a polymer of the formula:
X-(C₃F₆O)ₗ-(C₂F₄O)ₘ-(CF₂O)ₙ-(C₂F₄)ₚ-Y (I)
wherein X is a fluorine atom or a group of the formula: C_{q}F_{2q+1}O- in which q is an integer of 1 to 15; Y is a group of the formula: -COR in which R is a halogen atom, a hydrogen atom or a C₁-C₈ alkyl or fluoroalkyl group, a group of the formula: -OCOR' or -SO₂R' in which R' is a halogen atom or a group of the formula: -NCO; l is a number of 0 to 200; m is a number of 0 to 200, n is a number of 0 to 200; and p is a number of 0 to 200, provided that the sum of l, m and n is not zero;
or a polymer of the formula:
X-(CX₁X₂CF₂CF₂O)ᵣ-(CX₁X₂CF₂)ₙ-Y (II)
wherein X, Y and n are the same as defined above, X₁ and X₂ are the same or different and each is a hydrogen atom, a fluorine atom or a chlorine atom, provided that X₁ and X₂ are not fluorine atoms simultaneously, and r is a number of 1 to 200; as the active ingredient of an agent for protecting materials from termite damage.

2. A method for protecting a material from termite damage which comprises applying to the material an agent which comprises, as an active ingredient,
either a polymer of the formula:
X-(C₃F₆O)_{ℓ}-(C₂F₄O)ₘ-(CF₂O)ₙ-(C₂F₄)ₚ-Y
wherein X is a fluorine atom or a group of the formula: C_{q}F_{2q+1}O- in which q is an integer of 1 to 15; Y is a group of the formula: -COR in which R is a halogen atom, a hydrogen atom or a C₁-C₈ alkyl or fluoroalkyl group), a group of the formula: -OCOR' or -SO₂R' in which R' is a halogen atom or a group of the formula: -NCO; ℓ is a number of 0 to 200; m is a number of 0 to 200, n is a number of 0 to 200; and p is a number of 0 to 200, provided that the sun of ℓ, m and n is not zero;
or a polymer of the formula:
X-(CX₁X₂CF₂CF₂O)ᵣ-(CX₁X₂CF₂)ₙ-Y (II)
wherein X, Y and n are the same as defined above, X₁ and X₂ are the same or different and each is a hydrogen atom, a fluorine atom or a chlorine atom, provided that X₁ and X₂ are not fluorine atoms simultaneously, and r is a number of 1 to 200.

## Patentansprüche

1. Die Verwendung von entweder
einem Polymer der Formel:
X-(C₃F₆O)ₗ-(C₂F₄O)ₘ-(CF₂O)ₙ-(C₂F₄)ₚ-Y (I)
in der X ein Fluoratom oder eine Gruppe der Formel C_{q}F_{2q+1}O-, in der q eine ganze Zahl von 1 bis 15 ist; Y eine Gruppe der Formal -COR, in der R ein Halogenatom, ein Wasserstoffatom oder eine C₁-C₈-Alkyl- oder Fluoralkylgruppe ist, eine Gruppe der Formeln -OCOR' oder -SO₂R', in der R' ein Halogenatom ist, oder eine Gruppe -NCO bedeuten; 1 eine Zahl von 0 bis 200, m eine Zahl von 0 bis 200, n eine Zahl von 0 bis 200 und p eine Zahl von 0 bis 200 ist, unter der Voraussetzung, daß die Summe von l, m und n nicht Null ist;
oder von einem Polymer der Formel:
X-(CX₁X₂CF₂CF₂O)ᵣ-(CX₁X₂CF₂)ₙ-Y (II)
in der X, Y und n die oben angeführten Bedeutungen aufweisen, X₁ und X₂ gleich oder verschieden sind und jedes ein Wasserstoffatom, ein Fluoratom oder ein Chloratom darstellen, unter der Voraussetzung, daß X₁ und X₂ nicht gleichzeitig Fluoratome sind, und r eine Zahl von 0 bis 200 ist; als Wirkstoff eines Mittels zum Schutz von Materialien vor Termitenschaden.

2. Ein Verfahren zum Schützen eines Materials vor Termitenschaden, welches das Aufbringen eines Mittels auf das Material umfaßt, welches als Wirkstoff entweder
ein Polymer der Formel:
X-(C₃F₆O)ₗ-(C₂F₄O)ₘ-(CF₂O)ₙ-(C₂F₄)ₚ-Y (I)
in der X ein Fluoratom oder eine Gruppe der Formel C_{q}F_{2q+1}O-, in der q eine ganze Zahl von 1 bis 15 ist; Y eine Gruppe der Formel -COR, in der R ein Halogenatom, ein Wasserstoffatom oder eine C₁-C₈-Alkyl- oder Fluoralkylgruppe ist, eine Gruppe der Formeln -OCOR' oder -SO₂R', in der R' ein Halogenatom ist, oder eine Gruppe -NCO bedeuten; 1 eine Zahl von 0 bis 200, m eine Zahl von 0 bis 200, n eine Zahl von 0 bis 200 und p eine Zahl von 0 bis 200 ist, unter der Voraussetzung, daß die Summe von l, m und n nicht Null ist;
oder ein Polymer der Formel:
X-(CX₁X₂CF₂CF₂O)ᵣ-(CX₁X₂CF₂)ₙ-Y (II)
in der X, Y und n die oben angeführten Bedeutungen aufweisen, X₁ und X₂ gleich oder verschieden sind und jedes ein Wasserstoffatom, ein Fluoratom oder ein Chloratom darstellen, unter der Voraussetzung, daß X₁ und X₂ nicht gleichzeitig Fluoratome sind, und r eine Zahl von 0 bis 200 ist; umfaßt.

## Revendications

1. Utilisation de
soit un polymère de formule :
X-(C₃F₆O)_{ℓ}-(C₂F₄O)ₘ-(CF₂O)ₙ-(C₂F₄)ₚ-Y (I)
dans laquelle X représente un atome de fluor ou un groupement de formule : C_{q}F_{2q+1}O- dans laquelle q est un nombre entier compris entre 1 et 15 ; Y représente un groupement de formule : -COR dans laquelle R représente un atome d'halogène, un atome d'hydrogène ou un groupement alkyle ou fluoroalkyle en C₁-C₈, un groupement de formule : -OCOR' ou -SO₂R' dans laquelle R' représente un atome d'halogène ou un groupement de formule : -NCO ; ℓ est un nombre compris entre 0 et 200 ; m est un nombre compris entre 0 et 200 ; n est un nombre compris entre 0 et 200 ; et p est un nombre compris entre 0 et 200, à la condition que la somme de ℓ, m et n ne soit pas égale à 0 ;
soit un polymère de formule :
X-(CX₁X₂CF₂CF₂O)ᵣ-(CX₁X₂CF₂)ₙ-Y (II)
dans laquelle X, Y et n sont identiques à ce qui est défini ci-dessus, X₁ et X₂ sont identiques ou différents et ils représentent chacun un atome d'hydrogène, un atome de fluor ou un atome de chlore, à la condition que X₁ et X₂ ne soient pas simultanément des atomes de fluor, et r est un nombre compris entre 1 et 200 ; en tant que composant actif d'un agent destiné à protéger les matières des dégâts causés par des termites.

2. Procédé destiné à protéger une matière des dégâts causés par des termites qui comprend l'application à la matière d'un agent qui contient, en tant que composant actif,
soit un polymère de formule :
X-(C₃F₆O)_{ℓ}-(C₂F₄O)ₘ-(CF₂O)ₙ-(C₂F₄)ₚ-Y
dans laquelle X représente un atome de fluor ou un groupement de formule : C_{q}F_{2q+1}O- dans laquelle q est un nombre entier compris entre 1 et 15 ; Y représente un groupement de formule : -COR dans laquelle R représente un atome d'halogène, un atome d'hydrogène ou un groupement alkyle ou fluoroalkyle en C₁-C₈, un groupement de formule : -OCOR' ou -SO₂R' dans laquelle R' représente un atome d'halogène ou un groupement de formule : -NCO ; ℓ est un nombre compris entre 0 et 200 ; m est un nombre compris entre 0 et 200 ; n est un nombre compris entre 0 et 200 ; et p est un nombre compris entre 0 et 200, à la condition que la somme de ℓ, m et n ne soit pas égale à 0;
soit un polymère de formule :
X-(CX₁X₂CF₂CF₂O)ᵣ-(CX₁X₂CF₂)ₙ-Y (II)
dan laquelle X, Y et n sont identiques à ce qui est défini ci-dessus, X₁ et X₂ sont identiques ou différents et ils représentent chacun un atome d'hydrogène, un atome de fluor ou un atome de chlore, à la condition que X₁ et X₂ ne soient pas simultanément des atomes de fluor, et r est un nombre compris entre 1 et 200.
